# EUROPEAN PATENT SPECIFICATION

(11) **EP 4 407 392 B1**
(45) Date of publication and mention of the grant of the patent: **01.07.2026**
(21) Application number: 24154671.2
(22) Date of filing: 30.01.2024
(51) Int. Cl.: G05B 19/4061, G05B 19/4069

(54) **MACHINING CONTROL DEVICE, CONTROL METHOD FOR MACHINING CONTROL DEVICE, AND PROGRAM**
BEARBEITUNGSSTEUERUNGSVORRICHTUNG, STEUERUNGSVERFAHREN FÜR DIE BEARBEITUNGSSTEUERUNGSVORRICHTUNG UND PROGRAMM
DISPOSITIF DE COMMANDE D'USINAGE, PROCÉDÉ DE COMMANDE POUR DISPOSITIF DE COMMANDE D'USINAGE ET PROGRAMME

(30) Priority: 30.01.2023 JP 2023011582
(43) Date of publication of application: 31.07.2024
(73) Proprietor: Arum Incorporated, Kanazawa-shi, Ishikawa 920-8204 (JP)
(72) Inventor: Hirayama, Takayuki, Ishikawa, 920-8204 (JP)
(74) Representative: Novagraaf International SA

(56) References cited:
- US-A1- 2015 056 036
- US-A1- 2016 188 770
- US-A1- 2016 320 764

## Description

### BACKGROUND OF THE INVENTION

### 1. Field of the Invention

The present invention relates to a machining control device, a control method for the machining control device, and a program.

### Background Art

JP 2021-174152 A discloses a five-axis control machining tool in which a tool and a mounting table for mounting a workpiece are relatively moved by three linear axes and two rotation axes on the basis of numerical control (NC) data.

Further art is disclosed by the documents US 2015/056036 and US 2016/188770.

### SUMMARY OF THE INVENTION

When the workpiece is relatively moved by the five axes of the three linear axes and the two rotation axes and machined by using the tool, the workpiece is rotatable by the two rotation axes, increasing a degree of freedom of machining.

On the other hand, because the workpiece is rotatable by the two rotation axes, it is difficult to determine a posture of the workpiece with respect to the tool during machining. JP 2021-174152 A does not solve such a problem.

As one aspect, an object of the present disclosure is to provide a machining control device and the like capable of determining a posture of a tool with respect to a workpiece when the tool and the workpiece are relatively moved by five axes including two rotation axes to perform machining.

A machining control device configured to perform control of relatively moving a tool and a workpiece is set out in the appended claims.

A control method of a machining control device configured to perform control of relatively moving a tool and a workpiece is also set out in the appended claims.

A program causing a computer of a machining control device, the machining control device being configured to perform control of relatively moving a tool and a workpiece is further set out in the appended claims.

### Brief Description of Drawings

FIG. 1 is a diagram illustrating an example of a machining control system.
FIG. 2 is a diagram illustrating an example of a machine tool.
FIG. 3 is a block diagram illustrating an example of a machining control device.
FIG. 4 is a diagram illustrating an example of division of mesh data.
FIG. 5 is a diagram illustrating an example obtained by enlarging a portion of FIG. 4.
FIG. 6 is a diagram illustrating an example of an outline model.
FIG. 7 is a diagram illustrating an example of C-axis rotation of the mesh data.
FIG. 8 is a diagram illustrating an example of B-axis rotation of the mesh data.
FIG. 9A is a diagram illustrating an example in which a tip of tool data comes into contact with a face of a triangular mesh.
FIG. 9B is a diagram illustrating an example in which in the tip of the tool data comes into contact with one side of the triangular mesh.
FIG. 9C is a diagram illustrating an example in which the tip of the tool data comes into contact with one vertex of the triangular mesh.
FIG. 10 is a diagram illustrating an example of determination of a posture of the tool data.
FIG. 11 is a diagram illustrating an example of a GPU according to the present embodiment.
FIG. 12 is a flowchart illustrating an example of a flow of processing according to the present embodiment.
FIG. 13 is a flowchart continued from FIG. 12.
FIG. 14A is a diagram illustrating an example of a posture of the tool data determined for each first contact point of the mesh data.
FIG. 14B is a diagram illustrating an example of a machining region when roughing is performed.
FIG. 15A is a diagram illustrating an example of machining paths of a tool with respect to a workpiece when the present embodiment is not applied.
FIG. 15B is a diagram illustrating an example of machining paths of the tool with respect to the workpiece when the present embodiment is applied.

### DETAILED DESCRIPTION OF THE INVENTION

Hereinafter, the present embodiment will be described with reference to the drawings. In the drawings, the same or equivalent elements are denoted by the same reference signs, and redundant description thereof will be omitted. Note that the present embodiment described below does not unduly limit the contents recited in the appended claims. In addition, all components described in the present embodiment are not necessarily essential constituent elements of the present disclosure.

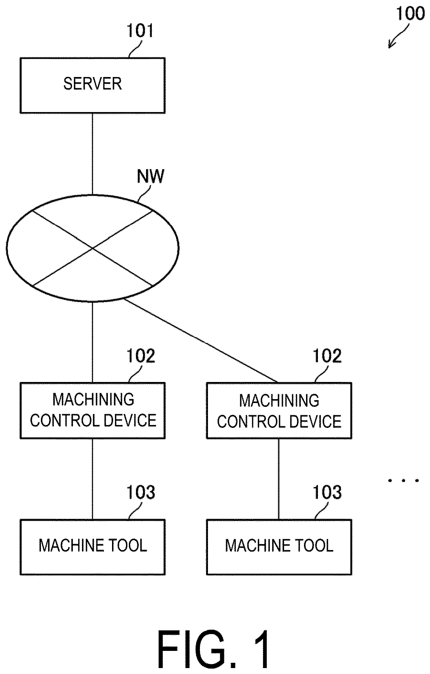

FIG. 1 is a diagram illustrating an example of a machining control system 100. The machining control system 100 includes a server 101, a plurality of machining control devices 102, and a plurality of machine tools 103. The server 101 and the machining control devices 102 are connected via a network NW such as the Internet.

Each machining control device 102 may perform different machining control in accordance with a type of machining performed by the machine tool 103. The machining type may be, for example, island milling in which machining is performed so as to leave an island shape, blind hole boring in which a blind hole is formed, or through-hole drilling in which a through-hole is formed. The number of the machining control devices 102 and the machine tools 103 included in the machining control system 100 may be one each.

The server 101 is a server that stores mesh data. The server 101 is installed at a predetermined location by, for example, a company that provides the machining control system 100. The mesh data is drawing data representing a shape of a machined object (workpiece) using a plurality of triangular meshes.

In the present embodiment, the mesh data is described as standard triangulated language (STL) data. However, the mesh data may be desired drawing data other than STL data. For example, the mesh data may be data in OBJ format.

The machining control device 102 is a computer that controls the machine tool 103. The machine tool 103 of the present embodiment is a numerical control (NC) machine tool that performs predetermined machining on a workpiece under the control of the machining control device 102.

The machining control device 102 acquires mesh data from the server 101 via the network NW. The machining control device 102 is a computer that uses the mesh data to determine, as a posture of the tool, a relative angle of the tool with respect to the workpiece when the tool machines the workpiece. Details of the machining control device 102 will be described below.

The machining control device 102 may acquire the mesh data from a recording medium such as a portable memory. For example, when the machining control device 102 is a stand-alone device not connected to the network NW, the machining control device 102 may acquire the mesh data from a portable memory in which the mesh data is stored.

The machining control device 102 controls the machine tool 103. The machine tool 103 is provided with a tool. The machine tool 103 performs predetermined machining on a workpiece using the tool. Hereinafter, the machining will be described as cutting. In addition, the machine tool 103 will be described as a tool that performs scanning line machining. However, the machine tool 103 may perform machining other than cutting, and may perform cutting other than scanning line machining.

The machine tool 103 brings the tool into contact with a surface of the workpiece to cut the workpiece. The machine tool 103 brings the tool into contact with many points on the surface of the workpiece to cut the workpiece. The machining control device 102 uses the mesh data to determine, as the posture of the tool, the relative angle of the tool with respect to the workpiece for each point where machining is performed on the surface of the workpiece. The machine tool 103 controls the posture of the tool, aligning the posture with a determined posture of the tool.

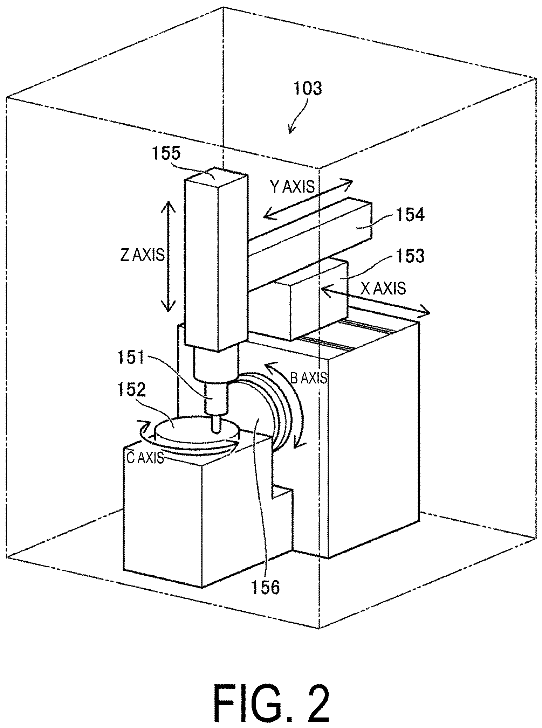

FIG. 2 is a diagram illustrating an example of the machine tool 103. The machine tool 103 includes a tool 151, a workpiece mounting table 152, an X-axis drive mechanism 153, a Y-axis drive mechanism 154, a Z-axis drive mechanism 155, and a B-axis drive mechanism 156. The tool 151 is a tool used to cut the workpiece. The tool 151 is, for example, an end mill. However, the tool 151 may be a tool other than an end mill.

The workpiece mounting table 152 is a table for mounting the workpiece thereon. In the machine tool 103 of FIG. 2, the workpiece mounting table 152 rotates around a C axis (first rotation axis) about the Z axis by drive control of a rotation drive mechanism (not illustrated) attached to the workpiece mounting table 152. The X-axis drive mechanism 153 moves the tool 151 linearly in an X-axis (first axis) direction. The Y-axis drive mechanism 154 moves the tool 151 linearly in a Y-axis (second axis) direction. The X axis and the Y axis are axes orthogonal to each other in the horizontal direction.

The Z-axis drive mechanism 155 moves the tool 151 in a Z-axis (third axis) direction. The Z-axis direction is a vertical direction. The machine tool 103 moves the tool 151 downward with respect to the workpiece mounted on the workpiece mounting table 152 to bring a tip of the tool 151 into contact with the workpiece and cut the workpiece.

The B-axis drive mechanism 156 rotates the workpiece mounting table 152 about the Y axis. A position of the tool 151 is controlled by the three linear axes described above. Further, the workpiece is rotated by the two rotation axes of the B axis and the C axis. Therefore, with the five axes of the three linear axes and the two rotation axes, machining can be performed by using the tool 151 at a desired position and a desired angle with respect to the workpiece.

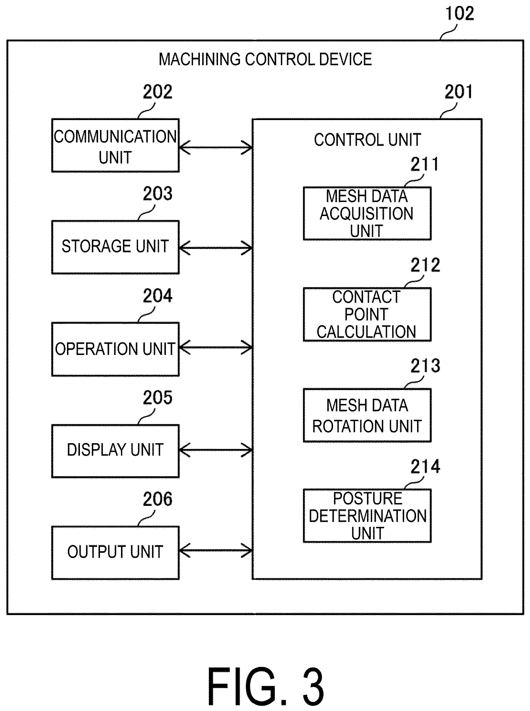

FIG. 3 is a block diagram illustrating an example of the machining control device 102. The machining control device 102 includes a control unit 201, a communication unit 202, a storage unit 203, an operation unit 204, a display unit 205, and an output unit 206. The machining control device 102 is not limited to the configuration of FIG. 3 and may include other elements or some of the elements may be omitted. The control unit 201 includes a processor and a memory. The control unit 201 according to the present embodiment includes a graphics processing unit (GPU) as a processor. Further, the processor may be a central processing unit (CPU).

The communication unit 202 is a network interface connected to the network NW, and transmits and receives information via the network NW in accordance with instructions from the control unit 201. In the present embodiment, the information includes mesh data.

The storage unit 203 includes, for example, an information recording medium such as a hard disk, a read-only memory (ROM), or a random access memory (RAM). The storage unit 203 is an information recording medium that holds a program executed by the processor of the control unit 201.

The operation unit 204 includes, for example, an interface such as a keyboard, a mouse, and a button, and outputs, in accordance with an instruction operation of a user, the content of the instruction operation to the control unit 201. The display unit 205 is, for example, a liquid crystal display, a cathode ray tube (CRT) display, or an organic electroluminescent (EL) display. The display unit 205 displays information according to an instruction from the control unit 201. The output unit 206 outputs control information for controlling the machine tool 103 to the machine tool 103.

The control unit 201 includes a mesh data acquisition unit 211, a contact point calculation unit 212, a mesh data rotation unit 213, and a posture determination unit 214. A function of the control unit 201 is a software function realized by the processor described above executing a plurality of command sets stored in the memory.

The mesh data acquisition unit 211 acquires the mesh data representing the shape of the workpiece from the server 101 via the communication unit 202. The contact point calculation unit 212 calculates a plurality of contact points (first contact points) where the tip of the tool data representing the tool 151 is brought into contact with the mesh data when the workpiece is machined using the tool 151. The first contact point is also a target point where the tip of the tool 151 brought into contact with the workpiece and machining is performed.

When the tool 151 machines the workpiece, the mesh data rotation unit 213 rotates the mesh data so that tool data representing the tool 151 moves downward in the Z-axis direction. During machining, the tool 151 is moved downward in the Z-axis direction and brought into contact with the workpiece, thereby machining the workpiece. At this time, the workpiece is rotated relative to the tool 151 moving in the Z-axis direction. Therefore, the mesh data rotation unit 213 rotates the mesh data relative to the tool data.

The posture determination unit 214 determines, as the posture of the tool 151 with respect to the workpiece, the relative angle of the tool data with respect to the mesh data when the tool 151 machines the workpiece. As described above, the tool 151 moves downward in the Z-axis direction. At this time, depending on the shape of the workpiece, the tool 151 may come into contact with another area of the workpiece before the tool 151 comes into contact with the first contact point which is the target point. The posture determination unit 214 determines the posture of the tool data that avoids such interference. Details will be described below.

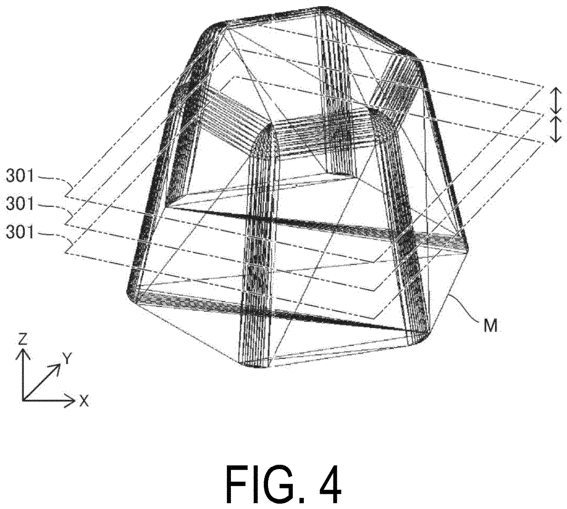

Next, calculation of the first contact points will be described. FIG. 4 is a diagram illustrating an example of division of the mesh data. As described above, the mesh data acquisition unit 211 acquires mesh data M. The contact point calculation unit 212 divides the acquired mesh data M by planes 301 at minute intervals (equal intervals) in the Z-axis direction. The plane 301 represented by a two dot chain line is an XY plane orthogonal to the Z-axis direction.

As described above, the mesh data M is data representing the shape of the workpiece using a plurality of triangular meshes. The contact point calculation unit 212 sets the plane 301 for each minute interval, and acquires a plurality of intersection points between each plane 301 and the triangular meshes constituting the mesh data M as the first contact points.

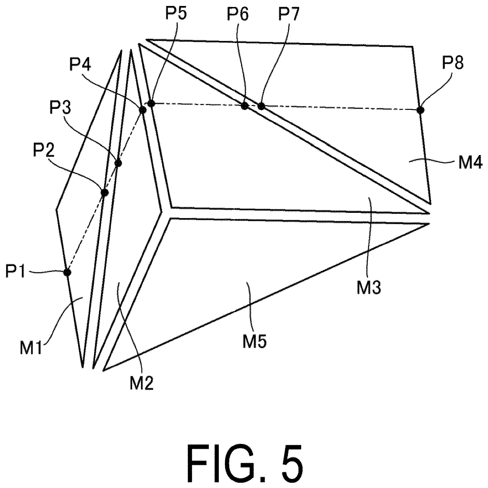

FIG. 5 is a diagram illustrating an example obtained by enlarging a portion of FIG. 4. In FIG. 5, five triangular meshes M1 to M5 constituting the mesh data M are illustrated. The triangular meshes M1 to M5 are shapes of portions of the mesh data M. As described above, the mesh data M is divided by the planes 301 at minute intervals.

The intersection points of the triangular mesh M1 and the plane 301 are intersection points P1 and P2. The intersection points of the triangular mesh M2 and the plane 301 are intersection points P3 and P4. The intersection points of the triangular mesh M3 and the plane 301 are intersection points P5 and P6. The intersection points of the triangular mesh M1 and the plane 301 are intersection points P7 and P8. The contact point calculation unit 212 calculates the respective intersection points P1 to P8 as the first contact points.

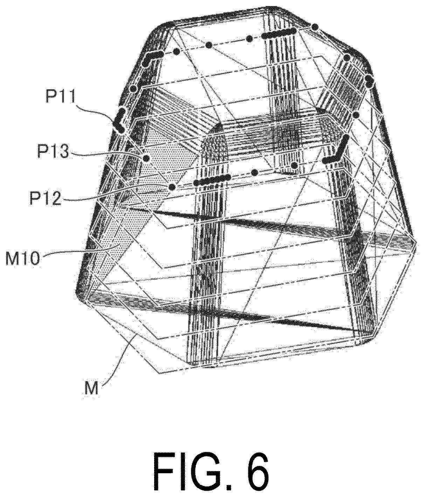

FIG. 6 is a diagram illustrating an example of an outline model. As described above, many intersection points P are set as the first contact points with respect to the mesh data M. From each first contact point, the outer shape of the mesh data M is represented by point cloud data along the Z-axis direction.

Of the mesh data representing the workpiece, a wide plane is constituted by a triangular mesh having a wide area compared with that of a narrow plane. For example, of the mesh data M, an area of a triangular mesh M10 (triangular mesh indicated by hatching) is wide. In this case, a distance between an intersection point P11 and an intersection point P12 of the triangular mesh M10 is long.

When the distance between the intersection point P11 (first intersection point) and the intersection point P12 (second intersection point) is equal to or greater than a predetermined distance, the contact point calculation unit 212 sets an intersection point P13 (third intersection point) between the intersection point P11 and the intersection point P12. Accordingly, it is possible to suppress an increase in distance between intersection points. This makes it possible to reproduce the outer shape of the mesh data M in which each first contact point (each intersection point) is set as point cloud data with higher accuracy. When the distance between the intersection points is long, the contact point calculation unit 212 may set a plurality of intersection points at regular intervals between the intersection points.

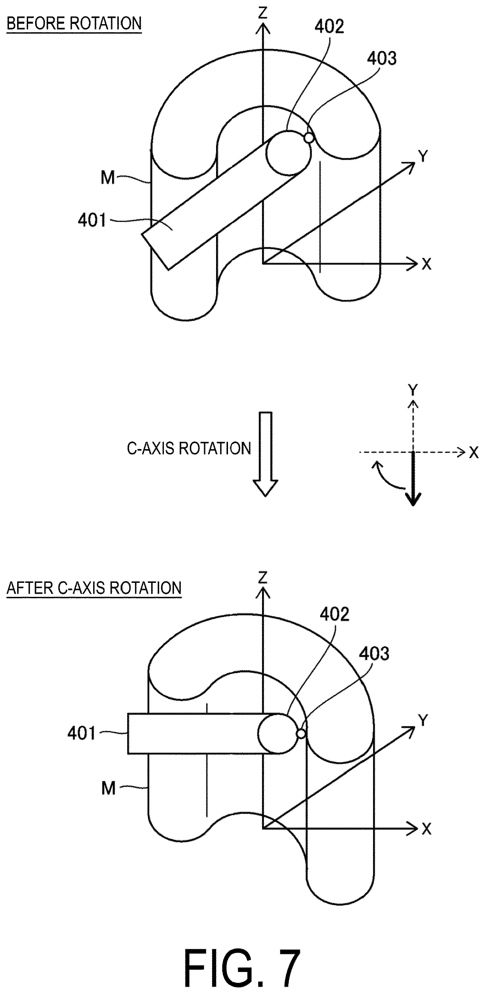

Next, rotation of the mesh data M will be described. FIG. 7 is a diagram illustrating an example of C-axis rotation of the mesh data M. In FIG. 7, the mesh data M represents the shape of a portion of the workpiece. The mesh data M in FIG. 7 constitutes a three-dimensional shape with a semicircular arc cross section. Tool data 401 is data representing the tool 151. A tip 402 of the tool data 401 represents the tip of the tool 151 that machines the workpiece. The tip of the tool 151 and the workpiece come into point contact with each other. In FIG. 7, a point 403 where the tip 402 of the tool data 401 and the mesh data M corresponding to the workpiece come into contact is referred to as a second contact point.

The mesh data rotation unit 213 rotates the mesh data M so that a Y component of a vector (hereinafter referred to as a tool vector) in a direction in which the tool data 401 moves becomes 0. During actual machining, this rotation is realized by the machine tool 103 controlling a C-axis drive mechanism (not illustrated) to rotate the workpiece mounting table 152 around the C axis about the Z axis.

When the mesh data rotation unit 213 rotates the mesh data M as described above, the mesh data M changes from the state before rotation to the state after C-axis rotation in FIG. 7. In the state after C-axis rotation in FIG. 7, the Y component of the tool vector of the tool data 401 with respect to the mesh data M is 0.

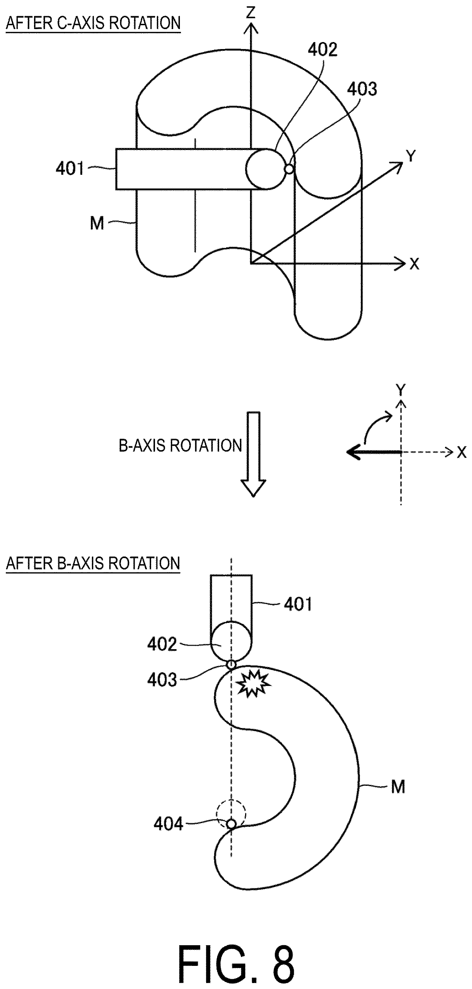

FIG. 8 is a diagram illustrating an example of B-axis rotation of the mesh data M. The after C-axis rotation in FIG. 8 is the same as the after C-axis rotation in FIG. 7. The mesh data rotation unit 213 rotates the mesh data M so that an X component of the tool vector of the tool data 401 becomes 0. During actual machining, this rotation is realized by the machine tool 103 controlling the B-axis drive mechanism 156 to rotate the workpiece mounting table 152 around the B axis about the Y axis.

When the mesh data rotation unit 213 rotates the mesh data M as described above, the X component of the tool vector of the tool data 401 with respect to the mesh data M becomes 0 as illustrated by the after B-axis rotation in FIG. 8.

As described above, the X component and the Y component of the tool vector of the tool data 401 with respect to the mesh data M become 0. During actual machining, the machine tool 103 moves the tool 151 downward in the Z-axis direction, and brings the tip of the tool 151 into contact with the workpiece to machine the workpiece. Therefore, the posture determination unit 214 performs the processing of C-axis rotation and B-axis rotation described above, thereby setting the X component and the Y component of the tool vector of the tool data 401 with respect to the mesh data M to 0.

The mesh data M (mesh data of a portion of the workpiece) in FIG. 7 and FIG. 8 constitutes a semicircular three-dimensional shape. In FIG. 8, among the mesh data M, the point to be machined is a first contact point 404 (target point).

In the state after B-axis rotation in FIG. 8, when the tool data 401 is moved in the Z-axis direction, the tip 402 of the tool data 401 comes into contact with another area of the mesh data M before the first contact point 404 which is the target point.

In this case, even during actual machining, when the tool 151 is moved in the Z-axis direction, the tool 151 comes into contact with another area of the workpiece before coming into contact with the point of the workpiece to be machined. That is, interference occurs in which the tool 151 comes into contact with an area of the workpiece other than the target point. In this case, the workpiece cannot be appropriately machined.

Therefore, the posture determination unit 214 determines the posture of each first contact point (target point) with respect to the mesh data M of the tool data 401 so as to avoid the interference described above when the tool 151 machines the workpiece. Hereinafter, determination of the posture will be described.

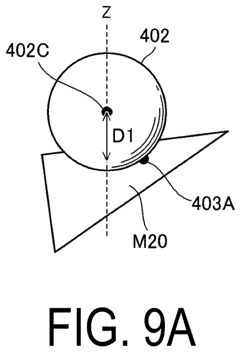

FIGS. 9A to 9C are diagrams illustrating an example of calculation of the second contact point. As described above, the mesh data rotation unit 213 rotates the mesh data M so that the X component and the Y component of the tool vector of the tool data 401 with respect to the mesh data M become 0. The posture determination unit 214 moves the tool data 401 downward toward the mesh data M after rotation to bring the tool data 401 into contact with the mesh data M after rotation. The contact point at this time is the second contact point.

The mesh data M is constituted by a plurality of triangular meshes. The tip 402 of the tool data 401 comes into point contact with a face, a side, or a vertex of one triangular mesh (triangular mesh M20) among the plurality of triangular meshes constituting the mesh data M.

FIG. 9A is a diagram illustrating an example in which the tip 402 of tool data 401 comes into contact with a face of the triangular mesh M20. In the present embodiment, the tip 402 of the tool data 401 has a spherical shape. In FIG. 9A, the interval between a Z-axis coordinate of a point 403A on the face of the triangular mesh M20 where the tip 402 of the tool data 401 comes into contact and a Z-axis coordinate of a center 402C of the tip 402 of the tool data 401 is defined as an interval D1.

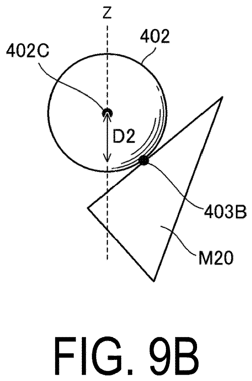

FIG. 9B is a diagram illustrating an example in which the tip 402 of tool data 401 comes into contact with one side of the triangular mesh M20. In FIG. 9B, an interval between a Z-axis coordinate of a point 403B on the side of the triangular mesh M20 where the tip 402 of the tool data 401 comes into contact and a Z-axis coordinate of the center 402C of the tip 402 of the tool data 401 is defined as an interval D2.

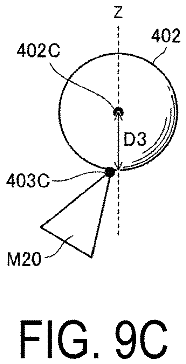

FIG. 9C is a diagram illustrating an example in which the tip 402 of tool data 401 comes into contact with one vertex of the triangular mesh M20. In FIG. 9C, an interval between a Z-axis coordinate of a point 403C (vertex of the triangular mesh M20) where the tip 402 of the tool data 401 comes into contact and a Z-axis coordinate of the center 402C of the tip 402 of the tool data 401 is defined as an interval D3.

The tip 402 of the tool data 401 corresponding to the longest interval among the intervals D1 to D3 is at the highest position with respect to the triangular mesh M20. The posture determination unit 214 calculates, as the second contact point, the Z-axis coordinate of the center 402C of the tip 402 of the tool data 401 corresponding to the longest interval of the intervals D1 to D3. For example, in the case of FIGS. 9A to 9C, the posture determination unit 214 calculates the Z-axis coordinate of the center 402C of the tip 402 of the tool data 401 in FIG. 9C as the second contact point.

As described above, the contact point calculation unit 212 calculates the plurality of first contact points representing the shape of the mesh data M by point cloud data. The first contact point is a target point where the tip 402 of the tool data 401 of the mesh data M is to be brought into contact. For each of the first contact points, the posture determination unit 214 determines, as the posture of the tool data 401, the relative angle of the tool data 401 with respect to the mesh data M so that the distance between the first contact point and the second contact point is the minimum distance.

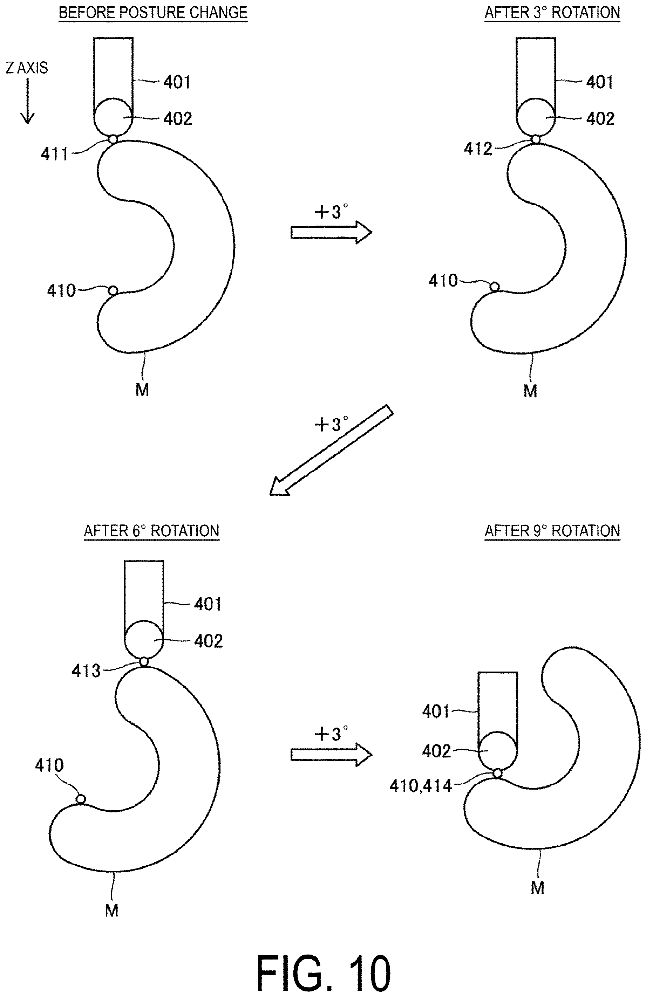

FIG. 10 is a diagram illustrating an example of determination of the posture of the tool data 401. The mesh data M represents a portion of the workpiece. When moved in the Z-axis direction in the state before posture determination in FIG. 10, the tool data 401 comes into contact with the mesh data M at a point (second contact point 411) at a position away from a first contact point 410 (target point). The posture determination unit 214 holds information indicating the distance between the first contact point 410 and the second contact point 411.

Next, the posture determination unit 214 rotates the mesh data M around the B axis or around the C axis by a minute angle. In the present embodiment, the minute angle (predetermined angle) of rotation is 3°, but the predetermined angle may be a desired rotation angle.

When the mesh data M is rotated by 3°, the position of a second contact point 412 where the tool data 401 comes into contact with the mesh data M when the tool data 401 is moved in the Z-axis direction is shifted. In the example of FIG. 10, the second contact point 412 is positioned away from the first contact point 410, which is the target point. The posture determination unit 214 holds information indicating the distance between the first contact point 410 and the second contact point 412 when the mesh data M is rotated by 3°.

The posture determination unit 214 further rotates the mesh data M by 3°. In this case, the tool data 401 and the mesh data M are in a state after 6° rotation in the example of FIG. 10. In this state, when the tool data 401 is moved in the Z-axis direction, the position of a second contact point 413 where the tool data 401 comes into contact with the mesh data M is shifted. In the example of FIG. 10, the second contact point 413 is still positioned away from the first contact point 410, which is the target point. The posture determination unit 214 holds information indicating the distance between the first contact point 410 and the second contact point 413 when the mesh data M is rotated by 6° (second rotation).

The posture determination unit 214 further rotates the mesh data M by 3°. In this case, the tool data 401 and the mesh data M are in the state after 9° rotation in the example of FIG. 10. With the mesh data M further rotated by 3°, when the tool data 401 is moved in the Z-axis direction in this state, the position of a second contact point 414 where the tool data 401 comes into contact with the mesh data M is shifted. In the example of FIG. 10, when the tool data 401 is moved in the Z-axis direction, the tool data 401 does not come into contact with an interfering area of the mesh data M. Therefore, the distance between the first contact point 410 and the second contact point 414 is 0 or substantially 0. The posture determination unit 214 holds information indicating the distance between the first contact point 410 and the second contact point 414 when the mesh data M is rotated by 9° (third rotation).

As described above, for one first contact point 410, the posture determination unit 214 calculates the second contact point 412 while changing the relative angle of the tool data 401 with respect to the mesh data M by a minute angle (3°), and calculates the distance between the first contact point 410 and the second contact point 412. The posture determination unit 214 holds information related to the calculated distance for each rotation angle (each minute angle) of the mesh data M.

For example, the posture determination unit 214 calculates the distance between the first contact point 410 and the second contact point 412 while changing the relative angle of the tool data 401 with respect to the mesh data M from "-90° to +90°" in increments of 3°. In this case, the posture determination unit 214 calculates a total of 60 (= 180°/3°) distances in order to calculate the first contact point 410 and the second contact point 412 for each rotation angle.

The posture determination unit 214 determines the rotation angle corresponding to the minimum distance among the held distances as the posture of the tool data 401. The rotation angle is a relative angle of the tool data 401 with respect to the mesh data M. The posture determination unit 214 determines the relative angle as the posture of the tool 151 for one first contact point. During actual machining, under the control of the machining control device 102, the machine tool 103 rotates the workpiece so as to take the determined posture. Accordingly, when the tool 151 is moved downward in the Z-axis direction, the tool 151 can be brought into contact with the target point (first contact point) of the workpiece without the tool 151 interfering with other areas of the workpiece.

In the example described above, the posture determination unit 214 calculates the distance described above for each of the angles from "-90° to +90°". However, the posture may be determined at a stage during calculation of the distance. For example, the posture determination unit 214 may stop the calculation of the distance when the calculated distance becomes equal to or less than a predetermined distance (for example, 0), and determine the rotation angle at the point where the calculated distance becomes equal to or less than the predetermined distance as the posture of the tool 151. Accordingly, because it is not necessary to calculate the distance for each rotation angle in the entire range from "-90° to +90°", a processing time can be shortened and a processing load can be reduced.

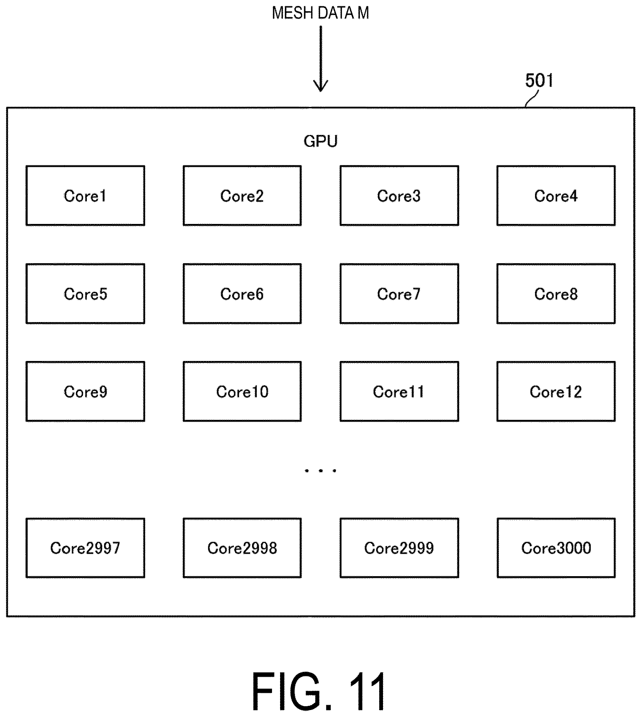

Next, parallel processing for determining the posture will be described. FIG. 11 is a diagram illustrating an example of a GPU according to the present embodiment. A control unit 201 includes a GPU 501. The GPU 501 includes a plurality of cores. In the example of FIG. 11, the GPU 501 includes 3000 cores. The number of cores in the GPU 501 is not limited to 3000.

The control unit 201 transfers the mesh data M to each core of the GPU 501. As described above, the mesh data M is divided by the planes 301 at minute intervals. Then, intersection points between each plane 301 and the plurality of triangular meshes constituting the mesh data M are set as the first contact points.

In the present embodiment, the control unit 201 respectively assigns calculation of the planes 301 of the mesh data M to the cores of the GPU 501. Each plane 301 includes a plurality of the first contact points. The posture determination unit 214 instructs each core of the GPU 501 to execute the calculation for determining the posture described above. As a result, each core of the GPU 501 executes the calculation for determining the posture for each of the plurality of first contact points in parallel.

As a result, because the calculation for determining the posture for each plane 301 (each slice) is executed in parallel, the processing for determining the posture of each first contact point can be performed at high speed for the mesh data M represented by the point cloud data.

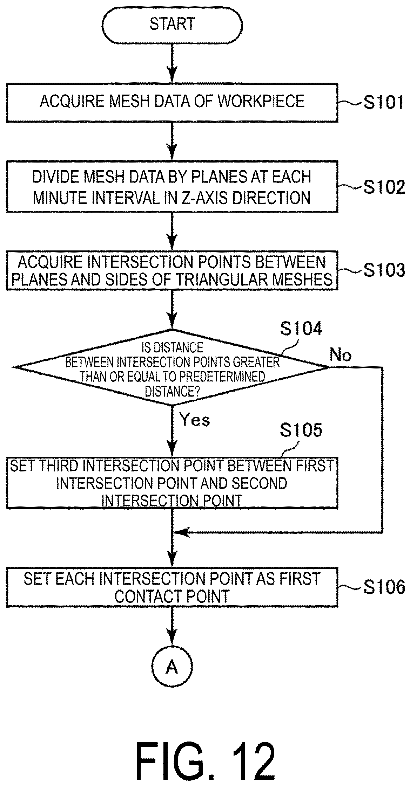

Next, a flow of processing according to the present embodiment will be described. FIG. 12 is a flowchart illustrating an example of the flow of processing according to the present embodiment. The mesh data acquisition unit 211 controls the communication unit 202 to acquire the mesh data M from the server 101 (step S101).

As illustrated in the example of FIG. 4, the contact point calculation unit 212 divides the mesh data M by each plane 301 at minute intervals in the Z-axis direction (step S302). For each of the planes 301, the contact point calculation unit 212 acquires a plurality of the intersection points between the plane 301 and the sides of each triangular mesh constituting the mesh data M (step S103). Thus, a large number of first contact points (target points) representing the outer shape of the mesh data M are acquired. **In** the present embodiment, the first contact points (target points) are represented by the outline of the mesh data M as point cloud data.

The contact point calculation unit 212 determines whether there are, among the intersection points acquired in step S103, intersection points having a distance between the intersection points being equal to or greater than a predetermined distance (step S104). When there are intersection points having a distance between the intersection points being equal to or greater than the predetermined distance, the contact point calculation unit 212 determines Yes in step S104, and advances the processing to step S105. When there are no intersection points having a distance between the intersection points being equal to or greater than the predetermined distance, the contact point calculation unit 212 determines No in step S104, and advances the processing to step S106.

When Yes is determined in step S104, the contact point calculation unit 212 sets a third intersection point between the first intersection point and the second intersection point having a distance between the intersection points being equal to or greater than the predetermined distance (step S105). The contact point calculation unit 212 may set a plurality of the third intersection points between the first intersection point and the second intersection point in accordance with the distance between the first intersection point and the second intersection point.

When No is determined in step S104 or when the processing of step S105 is executed, the contact point calculation unit 212 sets each calculated intersection point as a first contact point (step S106). Thus, a large number of first contact points (target points) representing the outer shape of the mesh data M are set. The control unit 201 advances the processing from "A" to step S107.

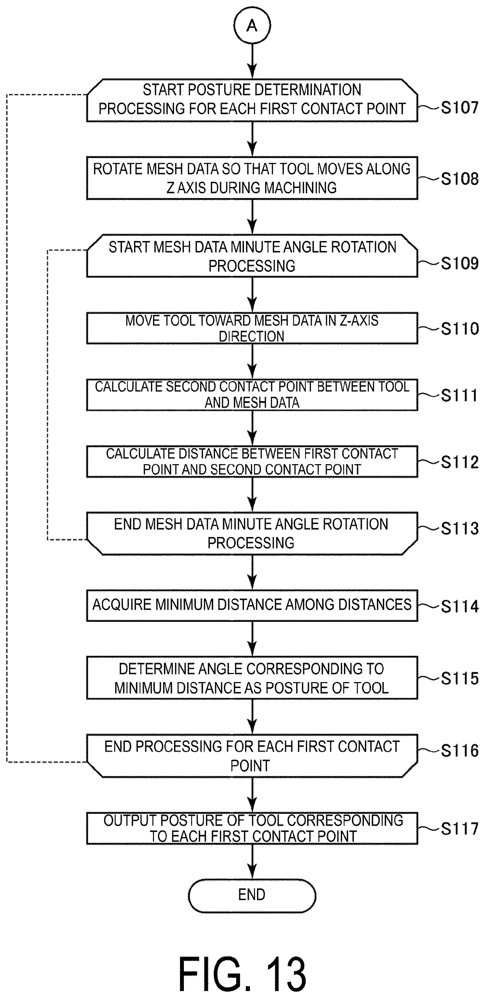

FIG. 13 is a flowchart continued from FIG. 12. As described above, a large number of first contact points are set in the mesh data M representing the outer shape of the workpiece. The control unit 201 starts loop processing for determining the posture of the tool data 401 for each first contact point with respect to the mesh data M (step S107). As described with reference to FIG. 7 and FIG. 8, the mesh data rotation unit 213 rotates the mesh data M around the C axis and around the B axis so that the tool 151 moves along the Z axis when the tool 151 machines the workpiece (step S108).

As described with reference to FIG. 10, the posture determination unit 214 starts loop processing related to the processing of rotating the mesh data M at minute intervals (step S109). The posture determination unit 214 moves the tool data 401 toward the mesh data M (step S110). Then, the posture determination unit 214 calculates the second contact point where the tool data 401 and the mesh data M come into contact with each other, as described with reference to FIG. 9A to FIG. 9C (step S111).

The posture determination unit 214 calculates the distance between the target first contact point when the loop processing is started in step 107 and the second contact point obtained in step S111 (step S112). The posture determination unit 214 holds information indicating the calculated distance for each minute interval.

The posture determination unit 214 repeats the processing of steps S110 to S112 until the loop processing related to the processing of rotating the mesh data M for each minute angle is completed for one first contact point. When the loop processing of rotating the mesh data M by each minute angle is completed, the posture determination unit 214 ends the loop processing and advances the processing to step S114.

By the loop processing described above, the posture determination unit 214 holds a plurality of pieces of information indicating the distances between the first contact points and the second contact points. The posture determination unit 214 acquires the minimum distance among the held information indicating the plurality of distances (step S114). Each distance corresponds to a rotation angle by which the mesh data M is rotated. The posture determination unit 214 determines an angle obtained by rotating the mesh data M corresponding to the minimum distance (a relative angle of the tool data 401 with respect to the mesh data M when machining the workpiece) as the posture of the tool data 401 (step S115).

The control unit 201 executes the loop processing (processing from step S107 to step S116) for determining the posture with respect to the mesh data M until the postures of the tool data 401 are determined for all first contact points. When the postures of the tool data 401 are determined for all first contact points, the control unit 201 ends the loop processing for determining the posture with respect to the mesh data M, and advances the processing to step S117.

As described above, the postures of the tool data 401 for all first contact points are determined. The control unit 201 outputs information (posture information) indicating the postures of the tool data 401 for all first contact points to the machine tool 103 via the output unit 206 (step S117). Thus, the processing of the machining control device 102 according to the present embodiment ends.

The machine tool 103 controls the tool 151, the workpiece mounting table 152, the X-axis drive mechanism 153, the Y-axis drive mechanism 154, the Z-axis drive mechanism 155, and the B-axis drive mechanism 156 on the basis of the control from the machining control device 102, thereby machining the workpiece.

When a target point (first contact point) of the workpiece is machined by the tool 151, the machine tool 103 slightly rotates the workpiece mounting table 152 to adjust the relative angle of the tool 151 with respect to the workpiece at the time of machining the workpiece so that the posture indicated by the posture information described above is obtained. As a result, the tool 151 can be brought into contact with the target point without the tool 151 interfering with an area of the workpiece different from the target point.

Note that, depending on the target point (first contact point), the workpiece mounting table 152 may not be rotated and interference of the tool 151 may not occur. **In** this case, the posture information related to the target point (first contact point) indicates that the workpiece mounting table 152 is not to be rotated. In such a case, the machine tool 103 does not rotate the workpiece mounting table 152.

The posture information described above includes information indicating the postures of the tool data 401 for all first contact points. The machine tool 103 controls the posture of the tool 151 when machining the workpiece on the basis of the posture information. Thus, the tool 151 can be brought into contact with all target points at one time without the tool 151 interfering with other areas of the workpiece.

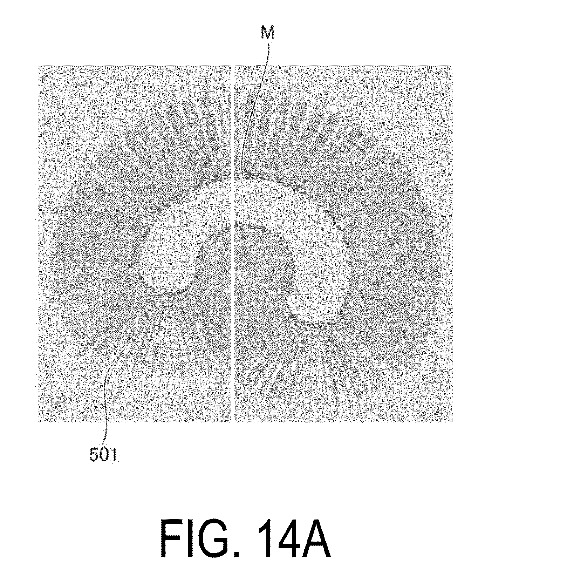

FIG. 14A is a diagram illustrating an example of the posture of the tool data 401 determined for each first contact point of the mesh data M. As illustrated in the example of FIG. 14A, one posture 501 is determined for each of the first contact points set around the mesh data M. The posture 501 is a posture of the tool 151 with respect to the workpiece when machining the workpiece.

When machining each of the first contact points using the tool 151, the machine tool 103 slightly rotates the workpiece so as to be in the posture 501 determined for each of the first contact points. Subsequently, the machine tool 103 moves the tool 151 downward in the Z-axis direction and brings the tool 151 into contact with the workpiece to machine the workpiece. Accordingly, the tool 151 can be brought into contact with the first contact point (target point) at one time without interfering with other areas of the workpiece.

Here, the machining of the workpiece includes finishing and roughing. The posture determination unit 214 of the machining control device 102 applies the posture 501 determined for each of the first contact points described above when performing finishing, but may also apply the determined posture 501 when performing roughing.

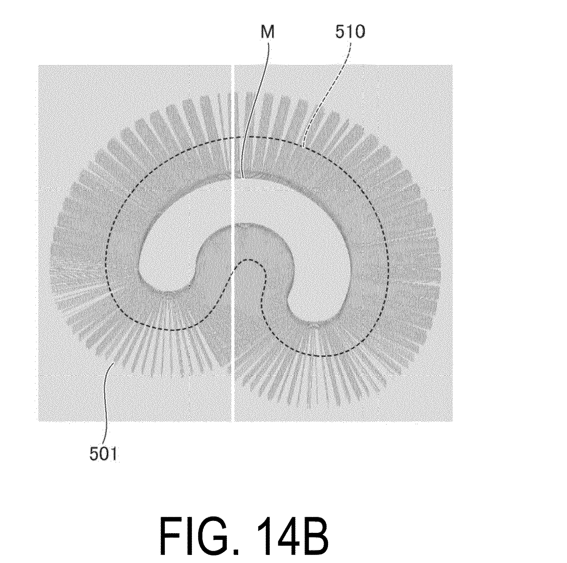

FIG. 14B is a diagram illustrating an example of a machining region when roughing is performed. A predetermined offset is set for the mesh data M in a machining region 510 (region indicated by a dashed line in FIG. 14B) when roughing is performed. Accordingly, when the posture 501 applied to finishing is applied to roughing, the tool 151 does not interfere with other areas of the workpiece. The machining control device 102 applies the posture determined for each first contact point when performing finishing also to roughing. Thus, the same posture of the tool 151 in which the tool 151 does not interfere with other areas of the workpiece can be applied to both finishing and roughing.

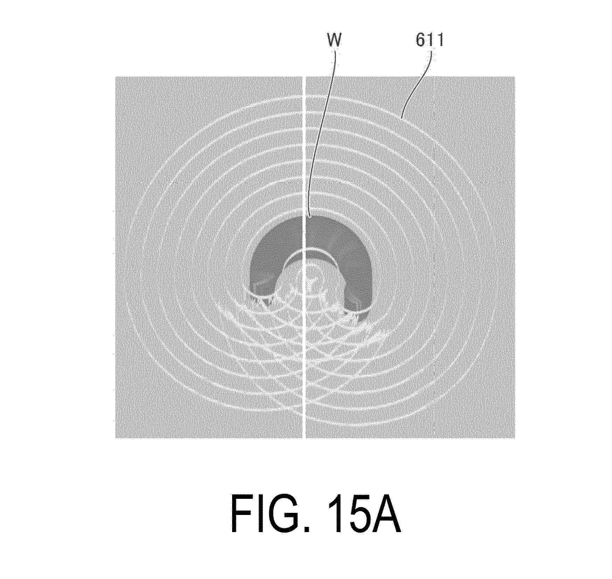

FIG. 15A is a diagram illustrating an example of machining paths of the tool 151 with respect to a workpiece W when the present embodiment is not applied. The machine tool 103 performs machining by bringing the tool 151 into contact with the entire periphery of the surface of the workpiece W. In the case of the example in FIG. 15A, the posture of the tool 151 when the tool 151 is brought into contact with the first contact point (target point) is not uniquely determined. Therefore, the machine tool 103 repeatedly brings the tool 151 into contact with the entire periphery of the workpiece W while changing the posture of the tool 151 with respect to the entire periphery of the surface of the workpiece W. Therefore, the tool 151 follows many machining paths.

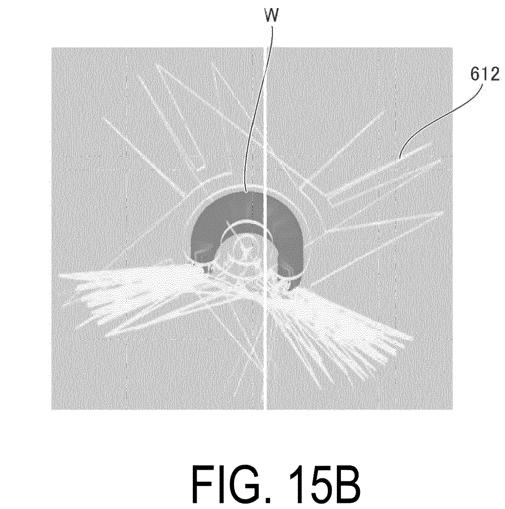

FIG. 15B is a diagram illustrating an example of the machining paths of the tool 151 with respect to the workpiece W when the present embodiment is applied. In the case of the example in FIG. 15B, because the present embodiment is applied, the posture of the tool 151 when the tool 151 is brought into contact with the first contact point (target point) is uniquely determined. Therefore, the machine tool 103 does not need to repeatedly bring the tool 151 into contact with the entire periphery of the surface of the workpiece W. Accordingly, the machining paths 601 of the tool 151 are significantly reduced compared with those in the example in FIG. 15A. With the number of machining paths being reduced, air cutting can be reduced, and a processing speed of cutting the workpiece is increased.

As described above, in the present embodiment, the machining control device rotates the mesh data so that the tool moves along the Z axis when the tool machines the workpiece. Then, for each of the first contact points, the machining control device determines, as the posture of the tool, a relative angle of the tool with respect to the mesh data on the basis of the distance between the first contact point and the second contact point while changing (rotating) the relative angle by a predetermined angle. As a result, when the tool actually machines the workpiece, the relative angle of the tool with respect to the workpiece can be uniquely determined, and there is no need to search for an appropriate posture of the tool with respect to the workpiece, thereby increasing the processing speed of cutting.

## Claims

1. A machining control device configured to perform control of relatively moving a tool (151) and a workpiece by five axes of a first axis and a second axis orthogonal to each other in a horizontal direction, a third axis in a vertical direction, a first rotation axis that rotates about one axis of the first axis and the second axis, and a second rotation axis that rotates about the third axis to machine the workpiece by the tool (151), the machining control device comprising:
a mesh data acquisition unit (211) configured to acquire mesh data representing a shape of the workpiece using a plurality of triangular meshes;
a contact point calculation unit (212) configured to calculate, in the mesh data, a plurality of first contact points where the tip of the tool data (401) representing the tool (151) is brought into contact with the mesh data when the workpiece is machined using the tool (151), wherein the contact point calculation unit (212) is configured to acquire, when the mesh data is divided at equal intervals by planes in the horizontal direction along the third axis, a plurality of intersection points between each of the planes and three sides of each of the plurality of triangular meshes constituting the mesh data, and set the acquired plurality of intersection points as the plurality of first contact points, the first contact point being a target point where the tip (402) of the tool data (401) of the mesh data M is to be brought into contact;
a mesh data rotation unit (213) configured to rotate the mesh data relative to the tool data (401) so that the tool data (401) representing the tool (151) moves along the third axis when the tool (151) machines the workpiece, the mesh data rotation unit (213) is further configured to rotate the mesh data M so that the X component and the Y component of the tool vector of the tool data (401) with respect to the mesh data M become 0; and
a posture determination unit (214) configured to calculate, for each of the plurality of first contact points and while changing a relative angle of the tool with respect to the mesh data for respective predetermined angles, a second contact point where the tip (402) of the tool (151) and the mesh data come into contact when the tool (151) is moved to the mesh data for each of the predetermined angles, and determine, as a posture of the tool (151), a relative angle of the tool data (401) with respect to the mesh data when the workpiece is machined, on the basis of respective distances between each of the plurality of first contact points and a plurality of the second contact points each calculated for the predetermined angles, wherein during actual machining, under the control of the machining control device (102), the machine tool (103) rotates the workpiece so as to take the determined posture.

2. The machining control device according to claim 1, wherein the posture determination unit (214) is configured to determine, as the posture of the tool (151), a relative angle corresponding to a minimum distance among the respective distances between each of the plurality of first contact points and the plurality of second contact points.

3. The machining control device according to claim 1, wherein the contact point calculation unit (212) is configured to set, when a distance between a first intersection point and a second intersection point among the plurality of intersection points is equal to or greater than a predetermined distance, a new third intersection point between the first intersection point and the second intersection point.

4. The machining control device according to claim 2, wherein the posture determination unit (214) is configured to determine, as a posture of tool data (401), a predetermined angle at a point where the distance calculated while changing each of the predetermined angles becomes equal to or less than a predetermined distance.

5. The machining control device according to claim 1, wherein the posture determination unit (214) is configured to determine the posture of the tool (151) for each of the plurality of first contact points when performing finishing, and apply the posture of the tool (151) determined when performing the finishing to each of the plurality of first contact points when performing roughing.

6. The machining control device according to claim 1, wherein processing of the posture determination unit (214) is executed in parallel by a plurality of cores of a graphics processing unit (GPU).

7. A control method of a machining control device configured to perform control of relatively moving a tool (151) and a workpiece by five axes of a first axis and a second axis orthogonal to each other in a horizontal direction, a third axis in a vertical direction, a first rotation axis that rotates about one axis of the first axis and the second axis, and a second rotation axis that rotates about the third axis to machine the workpiece by the tool (151), the control method comprising:
acquiring mesh data representing a shape of the workpiece using a plurality of triangular meshes;
calculating, in the mesh data, a plurality of first contact points where the tip of the tool data representing the tool (151) is brought into contact with the mesh data when the workpiece is machined using the tool (151) , and acquiring, when the mesh data is divided at equal intervals by planes in the horizontal direction along the third axis, a plurality of intersection points between each of the planes and three sides of each of the plurality of triangular meshes constituting the mesh data, and set the acquired plurality of intersection points as the plurality of first contact points, the first contact point being a target point where the tip (402) of the tool data (401) of the mesh data M is to be brought into contact;
rotating the mesh data relative to the tool data (401) so that the tool data (401) representing the tool (151) moves along the third axis when the tool machines the workpiece and further rotating the mesh data M so that the X component and the Y component of the tool vector of the tool data (401) with respect to the mesh data M become 0; and
calculating, for each of the plurality of first contact points and while changing a relative angle of the tool with respect to the mesh data for respective predetermined angles, a second contact point where the tip of the tool and the mesh data come into contact when the tool is moved to the mesh data for each of the predetermined angles, and determining, as a posture of the tool, a relative angle of the tool data (401) with respect to the mesh data when the workpiece is machined, on the basis of respective distances between each of the plurality of first contact points and a plurality of the second contact points each calculated for the predetermined angles, wherein during actual machining, under the control of the machining control device (102), the machine tool (103) rotates the workpiece so as to take the determined posture.

8. A program causing a computer of a machining control device, the machining control device being configured to perform control of relatively moving a tool and a workpiece by five axes of a first axis and a second axis orthogonal to each other in a horizontal direction, a third axis in a vertical direction, a first rotation axis that rotates about one axis of the first axis and the second axis, and a second rotation axis that rotates about the third axis to machine the workpiece by the tool, the program causing the computer to carry out the steps of the control method of claim 7.

## Patentansprüche

1. Bearbeitungssteuerungsvorrichtung, die konfiguriert ist, um die Steuerung des relativen Bewegens eines
Werkzeugs (151) und eines Werkstücks durch fünf Achsen einer ersten Achse und einer zweiten Achse, die
orthogonal zueinander in einer horizontalen Richtung sind, einer dritten Achse in einer vertikalen Richtung, einer
ersten Drehachse, die um eine Achse der ersten Achse und der zweiten Achse dreht, und einer zweiten Drehachse,
die um die dritte Achse dreht, durchzuführen, um das Werkstück mittels des Werkzeugs (151) zu bearbeiten,
wobei die Bearbeitungssteuerungsvorrichtung umfasst:
eine Netzdaten-Erfassungseinheit (211), die konfiguriert ist, um Netzdaten zu erfassen, die eine Form des
Werkstücks unter Verwendung einer Vielzahl von dreieckigen Netzen darstellen;
eine Kontaktpunkt-Berechnungseinheit (212), die konfiguriert ist, um in den Netzdaten eine Vielzahl von
ersten Kontaktpunkten zu berechnen, an denen die Spitze der Werkzeugdaten (401), die das Werkzeug (151)
darstellen, in Kontakt mit den Netzdaten gebracht wird, wenn das Werkstück mittels des Werkzeugs (151)
bearbeitet wird, wobei die Kontaktpunkt-Berechnungseinheit (212) konfiguriert ist, um zu erfassen, wenn die
Netzdaten in gleichen Abständen durch Ebenen in der horizontalen Richtung entlang der dritten Achse geteilt
werden, eine Vielzahl von Schnittpunkten zwischen jeder der Ebenen und drei Seiten jedes der Vielzahl von
dreieckigen Netzen, die die Netzdaten bilden, und die erfasste Vielzahl von Schnittpunkten als die Vielzahl von
ersten Kontaktpunkten festzulegen, wobei der erste Kontaktpunkt ein Zielpunkt ist, an dem die Spitze (402) der
Werkzeugdaten (401) der Netzdaten M in Kontakt gebracht werden soll;
eine Netzdaten-Rotationseinheit (213), die konfiguriert ist, um die Netzdaten relativ zu den Werkzeugdaten
(401) zu drehen, so dass sich die Werkzeugdaten (401), die das Werkzeug (151) darstellen, entlang der dritten
Achse bewegen, wenn das Werkzeug (151) das Werkstück bearbeitet, wobei die Netzdaten-Rotationseinheit (213)
ferner konfiguriert ist, um die Netzdaten M so zu drehen, dass die X-Komponente und die Y-Komponente des
Werkzeugvektors der Werkzeugdaten (401) in Bezug auf die Netzdaten M zu 0 werden; und
eine Posturbestimmungseinheit (214), die konfiguriert ist, um für jeden der Vielzahl von ersten
Kontaktpunkten und unter Änderung eines relativen Winkels des Werkzeugs in Bezug auf die Netzdaten für
jeweilige vorbestimmte Winkel einen zweiten Kontaktpunkt zu berechnen, an dem die Spitze (402) des Werkzeugs
(151) und die Netzdaten in Kontakt kommen, wenn das Werkzeug (151) zu den Netzdaten für jeden der
vorbestimmten Winkel bewegt wird, und als Postur des Werkzeugs einen relativen Winkel der Werkzeugdaten
(401) in Bezug auf die Netzdaten zu bestimmen, wenn das Werkstück bearbeitet wird, auf der Grundlage von
jeweiligen Abständen zwischen jedem der Vielzahl von ersten Kontaktpunkten und einer Vielzahl von zweiten
Kontaktpunkten, die jeweils für die vorbestimmten Winkel berechnet werden, wobei während der tatsächlichen
Bearbeitung unter der Steuerung der Bearbeitungssteuerungsvorrichtung (102) die Werkzeugmaschine (103) das
Werkstück dreht, um die bestimmte Postur einzunehmen.

2. Bearbeitungssteuerungsvorrichtung nach Anspruch 1, wobei die Posturbestimmungseinheit (214) konfiguriert
ist, um als Postur des Werkzeugs (151) einen relativen Winkel zu bestimmen, der einem minimalen Abstand unter
den jeweiligen Abständen zwischen jedem der Vielzahl von ersten Kontaktpunkten und der Vielzahl von zweiten
Kontaktpunkten entspricht.

3. Bearbeitungssteuerungsvorrichtung nach Anspruch 1, wobei die Kontaktpunkt-Berechnungseinheit (212)
konfiguriert ist, um festzulegen, wenn ein Abstand zwischen einem ersten Schnittpunkt und einem zweiten
Schnittpunkt unter der Vielzahl von Schnittpunkten gleich oder größer als ein vorbestimmter Abstand ist, einen
neuen dritten Schnittpunkt zwischen dem ersten Schnittpunkt und dem zweiten Schnittpunkt.

4. Bearbeitungssteuerungsvorrichtung nach Anspruch 2, wobei die Posturbestimmungseinheit (214) konfiguriert
ist, um als Postur von Werkzeugdaten (401) einen vorbestimmten Winkel an einem Punkt zu bestimmen, an dem
der berechnete Abstand, während jeder der vorbestimmten Winkel geändert wird, gleich oder kleiner als ein
vorbestimmter Abstand wird.

5. Bearbeitungssteuerungsvorrichtung nach Anspruch 1, wobei die Posturbestimmungseinheit (214) konfiguriert
ist, um die Postur des Werkzeugs (151) für jeden der Vielzahl von ersten Kontaktpunkten bei der Durchführung
einer Schlichtbearbeitung zu bestimmen, und die bei der Durchführung der Schlichtbearbeitung bestimmte Postur
des Werkzeugs (151) auf jeden der Vielzahl von ersten Kontaktpunkten bei der Durchführung einer
Schruppbearbeitung anzuwenden.

6. Bearbeitungssteuerungsvorrichtung nach Anspruch 1, wobei die Verarbeitung der Posturbestimmungseinheit
(214) parallel durch eine Vielzahl von Kernen einer Grafikverarbeitungseinheit (GPU) ausgeführt wird.

7. Steuerungsverfahren einer Bearbeitungssteuerungsvorrichtung, die konfiguriert ist, um die Steuerung des
relativen Bewegens eines Werkzeugs (151) und eines Werkstücks durch fünf Achsen einer ersten Achse und einer
zweiten Achse, die orthogonal zueinander in einer horizontalen Richtung sind, einer dritten Achse in einer
vertikalen Richtung, einer ersten Drehachse, die um eine Achse der ersten Achse und der zweiten Achse dreht,
und einer zweiten Drehachse, die um die dritte Achse dreht, durchzuführen, um das Werkstück mittels des
Werkzeugs (151) zu bearbeiten, wobei das Steuerungsverfahren umfasst:
Erfassen von Netzdaten, die eine Form des Werkstücks unter Verwendung einer Vielzahl von dreieckigen
Netzen darstellen;
Berechnen, in den Netzdaten, einer Vielzahl von ersten Kontaktpunkten, an denen die Spitze der
Werkzeugdaten, die das Werkzeug (151) darstellen, in Kontakt mit den Netzdaten gebracht wird, wenn das
Werkstück mittels des Werkzeugs (151) bearbeitet wird, und Erfassen, wenn die Netzdaten in gleichen Abständen
durch Ebenen in der horizontalen Richtung entlang der dritten Achse geteilt werden, einer Vielzahl von
Schnittpunkten zwischen jeder der Ebenen und drei Seiten jedes der Vielzahl von dreieckigen Netzen, die die
Netzdaten bilden, und Festlegen der erfassten Vielzahl von Schnittpunkten als die Vielzahl von ersten
Kontaktpunkten, wobei der erste Kontaktpunkt ein Zielpunkt ist, an dem die Spitze (402) der Werkzeugdaten
(401) der Netzdaten M in Kontakt gebracht werden soll;
Drehen der Netzdaten relativ zu den Werkzeugdaten (401), so dass sich die Werkzeugdaten (401), die das
Werkzeug (151) darstellen, entlang der dritten Achse bewegen, wenn das Werkzeug das Werkstück bearbeitet, und
weiteres Drehen der Netzdaten M, so dass die X-Komponente und die Y-Komponente des Werkzeugvektors der
Werkzeugdaten (401) in Bezug auf die Netzdaten M zu 0 werden; und
Berechnen, für jeden der Vielzahl von ersten Kontaktpunkten und unter Änderung eines relativen Winkels des
Werkzeugs in Bezug auf die Netzdaten für jeweilige vorbestimmte Winkel, eines zweiten Kontaktpunkts, an dem
die Spitze des Werkzeugs und die Netzdaten in Kontakt kommen, wenn das Werkzeug zu den Netzdaten für jeden
der vorbestimmten Winkel bewegt wird, und Bestimmen, als Postur des Werkzeugs, eines relativen Winkels der
Werkzeugdaten (401) in Bezug auf die Netzdaten, wenn das Werkstück bearbeitet wird, auf der Grundlage von
jeweiligen Abständen zwischen jedem der Vielzahl von ersten Kontaktpunkten und einer Vielzahl von zweiten
Kontaktpunkten, die jeweils für die vorbestimmten Winkel berechnet werden, wobei während der tatsächlichen
Bearbeitung unter der Steuerung der Bearbeitungssteuerungsvorrichtung (102) die Werkzeugmaschine (103) das
Werkstück dreht, um die bestimmte Postur einzunehmen.

8. Programm, das einen Computer einer Bearbeitungssteuerungsvorrichtung veranlasst, wobei die
Bearbeitungssteuerungsvorrichtung konfiguriert ist, um die Steuerung des relativen Bewegens eines Werkzeugs
und eines Werkstücks durch fünf Achsen einer ersten Achse und einer zweiten Achse, die orthogonal zueinander
in einer horizontalen Richtung sind, einer dritten Achse in einer vertikalen Richtung, einer ersten Drehachse, die
um eine Achse der ersten Achse und der zweiten Achse dreht, und einer zweiten Drehachse, die um die dritte
Achse dreht, durchzuführen, um das Werkstück mittels des Werkzeugs zu bearbeiten, wobei das Programm den
Computer veranlasst, die Schritte des Steuerungsverfahrens nach Anspruch 7 auszuführen.

## Revendications

1. Dispositif de commande d'usinage configuré pour effectuer la commande du déplacement relatif d'un outil
(151) et d'une pièce à usiner par cinq axes d'un premier axe et d'un deuxième axe orthogonaux l'un à l'autre dans
une direction horizontale, d'un troisième axe dans une direction verticale, d'un premier axe de rotation qui tourne
autour d'un axe du premier axe et du deuxième axe, et d'un deuxième axe de rotation qui tourne autour du
troisième axe pour usiner la pièce à usiner au moyen de l'outil (151), le dispositif de commande d'usinage
comprenant :
une unité d'acquisition de données de maillage (211) configurée pour acquérir des données de maillage
représentant une forme de la pièce à usiner au moyen d'une pluralité de maillages triangulaires ;
une unité de calcul de points de contact (212) configurée pour calculer, dans les données de maillage, une
pluralité de premiers points de contact où la pointe des données d'outil (401) représentant l'outil (151) est amenée
en contact avec les données de maillage lorsque la pièce à usiner est usinée au moyen de l'outil (151), dans
laquelle l'unité de calcul de points de contact (212) est configurée pour acquérir, lorsque les données de maillage
sont divisées à intervalles égaux par des plans dans la direction horizontale le long du troisième axe, une pluralité
de points d'intersection entre chacun des plans et trois côtés de chacune de la pluralité de maillages triangulaires
constituant les données de maillage, et établir la pluralité acquise de points d'intersection en tant que pluralité de
premiers points de contact, le premier point de contact étant un point cible où la pointe (402) des données d'outil
(401) des données de maillage M doit être amenée en contact ;
une unité de rotation de données de maillage (213) configurée pour faire tourner les données de maillage par
rapport aux données d'outil (401) de sorte que les données d'outil (401) représentant l'outil (151) se déplacent le
long du troisième axe lorsque l'outil (151) usine la pièce à usiner, l'unité de rotation de données de maillage
(213) étant en outre configurée pour faire tourner les données de maillage M de sorte que la composante X et la
composante Y du vecteur d'outil des données d'outil (401) par rapport aux données de maillage M deviennent 0 ;
et
une unité de détermination de posture (214) configurée pour calculer, pour chacun de la pluralité de premiers
points de contact et tout en modifiant un angle relatif de l'outil par rapport aux données de maillage pour des
angles prédéterminés respectifs, un deuxième point de contact où la pointe (402) de l'outil (151) et les données de
maillage entrent en contact lorsque l'outil (151) est déplacé vers les données de maillage pour chacun des angles
prédéterminés, et déterminer, en tant que posture de l'outil, un angle relatif des données d'outil (401) par rapport
aux données de maillage lorsque la pièce à usiner est usinée, sur la base de distances respectives entre chacun de
la pluralité de premiers points de contact et une pluralité de deuxièmes points de contact chacun calculé pour les
angles prédéterminés, dans lequel lors de l'usinage réel, sous la commande du dispositif de commande d'usinage
(102), la machine-outil (103) fait tourner la pièce à usiner de manière à prendre la posture déterminée.

2. Dispositif de commande d'usinage selon la revendication 1, dans lequel l'unité de détermination de posture
(214) est configurée pour déterminer, en tant que posture de l'outil (151), un angle relatif correspondant à une
distance minimale parmi les distances respectives entre chacun de la pluralité de premiers points de contact et la
pluralité de deuxièmes points de contact.

3. Dispositif de commande d'usinage selon la revendication 1, dans lequel l'unité de calcul de points de contact
(212) est configurée pour établir, lorsqu'une distance entre un premier point d'intersection et un deuxième point
d'intersection parmi la pluralité de points d'intersection est égale ou supérieure à une distance prédéterminée, un
nouveau troisième point d'intersection entre le premier point d'intersection et le deuxième point d'intersection.

4. Dispositif de commande d'usinage selon la revendication 2, dans lequel l'unité de détermination de posture
(214) est configurée pour déterminer, en tant que posture de données d'outil (401), un angle prédéterminé en un
point où la distance calculée tout en modifiant chacun des angles prédéterminés devient égale ou inférieure à une
distance prédéterminée.

5. Dispositif de commande d'usinage selon la revendication 1, dans lequel l'unité de détermination de posture
(214) est configurée pour déterminer la posture de l'outil (151) pour chacun de la pluralité de premiers points de
contact lors de la réalisation d'une finition, et appliquer la posture de l'outil (151) déterminée lors de la
réalisation de la finition à chacun de la pluralité de premiers points de contact lors de la réalisation d'un
dégrossissage.

6. Dispositif de commande d'usinage selon la revendication 1, dans lequel le traitement de l'unité de
détermination de posture (214) est exécuté en parallèle par une pluralité de cœurs d'une unité de traitement
graphique (GPU).

7. Procédé de commande d'un dispositif de commande d'usinage configuré pour effectuer la commande du
déplacement relatif d'un outil (151) et d'une pièce à usiner par cinq axes d'un premier axe et d'un deuxième axe
orthogonaux l'un à l'autre dans une direction horizontale, d'un troisième axe dans une direction verticale, d'un
premier axe de rotation qui tourne autour d'un axe du premier axe et du deuxième axe, et d'un deuxième axe de
rotation qui tourne autour du troisième axe pour usiner la pièce à usiner au moyen de l'outil (151), le procédé de
commande comprenant :
l'acquisition de données de maillage représentant une forme de la pièce à usiner au moyen d'une pluralité de
maillages triangulaires ;
le calcul, dans les données de maillage, d'une pluralité de premiers points de contact où la pointe des données
d'outil représentant l'outil (151) est amenée en contact avec les données de maillage lorsque la pièce à usiner est
usinée au moyen de l'outil (151), et l'acquisition, lorsque les données de maillage sont divisées à intervalles
égaux par des plans dans la direction horizontale le long du troisième axe, d'une pluralité de points d'intersection
entre chacun des plans et trois côtés de chacune de la pluralité de maillages triangulaires constituant les données
de maillage, et l'établissement de la pluralité acquise de points d'intersection en tant que pluralité de premiers
points de contact, le premier point de contact étant un point cible où la pointe (402) des données d'outil (401) des
données de maillage M doit être amenée en contact ;
la rotation des données de maillage par rapport aux données d'outil (401) de sorte que les données d'outil
(401) représentant l'outil (151) se déplacent le long du troisième axe lorsque l'outil usine la pièce à usiner et la
rotation supplémentaire des données de maillage M de sorte que la composante X et la composante Y du vecteur
d'outil des données d'outil (401) par rapport aux données de maillage M deviennent 0 ; et
le calcul, pour chacun de la pluralité de premiers points de contact et tout en modifiant un angle relatif de
l'outil par rapport aux données de maillage pour des angles prédéterminés respectifs, d'un deuxième point de
contact où la pointe de l'outil et les données de maillage entrent en contact lorsque l'outil est déplacé vers les
données de maillage pour chacun des angles prédéterminés, et la détermination, en tant que posture de l'outil, d'un
angle relatif des données d'outil (401) par rapport aux données de maillage lorsque la pièce à usiner est usinée,
sur la base de distances respectives entre chacun de la pluralité de premiers points de contact et une pluralité de
deuxièmes points de contact chacun calculé pour les angles prédéterminés, dans lequel lors de l'usinage réel, sous
la commande du dispositif de commande d'usinage (102), la machine-outil (103) fait tourner la pièce à usiner de
manière à prendre la posture déterminée.

8. Programme amenant un ordinateur d'un dispositif de commande d'usinage, le dispositif de commande
d'usinage étant configuré pour effectuer la commande du déplacement relatif d'un outil et d'une pièce à usiner
par cinq axes d'un premier axe et d'un deuxième axe orthogonaux l'un à l'autre dans une direction horizontale,
d'un troisième axe dans une direction verticale, d'un premier axe de rotation qui tourne autour d'un axe du
premier axe et du deuxième axe, et d'un deuxième axe de rotation qui tourne autour du troisième axe pour usiner
la pièce à usiner au moyen de l'outil, le programme amenant l'ordinateur à exécuter les étapes du procédé de
commande selon la revendication 7.
